# EUROPEAN PATENT APPLICATION

(11) **EP 4 610 281 A1**
(43) Date of publication of application: **03.09.2025**
(21) Application number: 24160204.4
(22) Date of filing: 28.02.2024
(51) Int. Cl.: C08B 37/00, C08L 5/00

(54) **EXTRACTING POLYSACCHARIDES FROM MACROALGAE**

(71) Applicant: Nederlandse Organisatie voor toegepast-natuurwetenschappelijk Onderzoek TNO, 2595 DA 's-Gravenhage (NL)
(72) Inventor: DUSSAN ROJAS, Karla Milena, 2595 DA 's-Gravenhage (NL); HOEK, Michiel, 2595 DA 's-Gravenhage (NL); BONOUVRIE, Petronella Adriana, 2595 DA 's-Gravenhage (NL); COBUSSEN-POOL, Esther Miranda, 2595 DA 's-Gravenhage (NL)
(74) Representative: V.O.

(57) **Abstract**

The disclosure pertains to a method for extracting polysaccharides from biomass, in particular from green seaweed. A combination of a washing treatment and an extraction treatment is used.

## Description

### Field

The invention pertains to the production of compounds that are useful for the production of e.g. bio-based materials and compositions, and in particular to the extraction of polysaccharides from green seaweed.

### Introduction

Seaweed, i.e. marine macroalgae constitute a rich source of biological compounds. The commercial production of seaweed currently only concerns red and brown algae. There is a desire to extract polysaccharides from green seaweed, i.e. from green macroalgae (Chlorophyta). Hence, the invention pertains to the extraction of compounds from green macroalgae, in particular to extract polysaccharides, more in particular ulvan from seaweed of the genus *Ulva.* Ulvan is a gelling sulfated polysaccharide. It has been described as having biological activities including immunomodulating, antiviral, antioxidant, antihyperlipidemic and anticancer. A background reference about the extraction of ulvan and its applications is provided by: Kidgell et all, Ulvan: A systematic review of extraction, composition and function, Algal Research 39, 2019, article 101422; https://doi.org/10.1016/j.algal.2019.101422.

FR2998894A1 describes a method of treating algae. The method comprises (a) diffusing the algae to be treated in water, (b) filtering a pulp recovered from the step (a), (c) ultrafiltration of the pressing juice, (d) demineralizing the ultrafiltration retentate and decanting the demineralized retentate, or decanting the ultrafiltration retentate and demineralizing the product obtained from decantation, and (e) recovering the vegetable protein present in the algae in one part and sulfated polysaccharide present in the algae in another part.

It is generally advantageous if methods for extracting polysaccharides, e.g. ulvan, from algae have a high yield.

### Summary

The invention aims to provide, in an aspect, a method of extracting polysaccharides, in particular ulvan, from biomass, in particular from green seaweed. The method involves two treatments, preferably a washing step and an extraction step. In particular, two product fractions are obtained, one from each treatment, i.e. one from the washing step and another from the extraction step.

The invention provides a method of extracting a polysaccharide-comprising fraction from biomass, in particular a green seaweed, the comprising: subjecting the biomass to a treatment, preferably a washing treatment, that preferably involves combining the biomass with a first aqueous liquid to form a first slurry and separating a first solid fraction and a first liquid fraction from the first slurry; purifying the first liquid fraction to obtain a first polysaccharide fraction; subjecting the first solid seaweed fraction to an extraction treatment, wherein in the extraction treatment preferably a second aqueous liquid is used preferably at temperature that is at least 20°C higher than during the washing treatment and/or preferably at a second pH that is lower than during the washing treatment to obtain a second slurry; separating a second solid fraction and a second liquid fraction from the second slurry; and purifying the second liquid fraction to obtain a second polysaccharide fraction. The washing step and extraction step can also be referred to as first treatment and second treatment.

A preferred embodiment provides a method of extracting a polysaccharide-comprising fraction from a green seaweed, the comprising: subjecting the green seaweed to a washing treatment that involves combining the green seaweed with a first aqueous liquid to form a first slurry and separating a first solid seaweed fraction and a first liquid fraction from the first slurry; purifying the first liquid fraction to obtain a first polysaccharide fraction; subjecting the first solid seaweed fraction to an extraction treatment with a second aqueous liquid at temperature that is at least 20°C higher than during the washing treatment and/or at a second pH that is lower than during the washing treatment to obtain a second slurry; separating a second solid fraction and a second liquid fraction from the second slurry; and purifying the second liquid fraction to obtain a second polysaccharide fraction.

Generally the disclosure pertains to a method for extracting polysaccharides from biomass, in particular from green seaweed. A combination of a washing treatment and an extraction treatment is used.

### Brief description of the drawings

Figure 1 schematically illustrates an example method according to the invention.
Figure 2 provides photographs of first ulvan extract (Fig. 2A) and a second ulvan extract (Fig. 2B) obtained in Example 1.
Figure 3 presents the distribution of main components in *Ulva lactuca* among the four main product streams in Example 1.
Figure 4 shows SEC chromatograms of the first ulvan extract (solid line) and second ulvan extract (dashed line) obtained in Example 1.

Any embodiments illustrated in the figures are examples only and do not limit the invention.

### Detailed description

The method involves providing a feedstock, in particular a green seaweed feedstock, in particular comminuted (size-reduced) green seaweed. For instance, milled dried seaweed is used as a feedstock. The drying is for instance performed at a temperature below 60°C to avoid thermal degradation during the drying, for instance by freeze drying. As another example, ground wet seaweed can be used. The particle size of the seaweed feedstock is preferably less than 4 mm.

Generally, the feedstock can be macro algae biomass. The green seaweed is e.g. of the genus *Ulva* and is e.g. *Ulva lactuca* The green seaweed feedstock is e.g. cultivated seaweed.

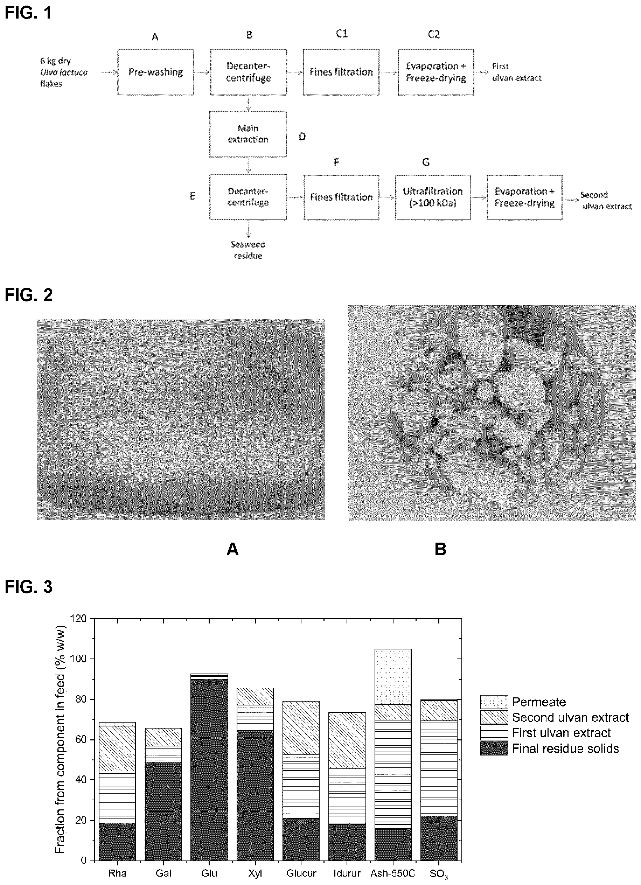

**Figure 1** schematically illustrates an example method according to the invention. The use of reference numerals in the following discussion, referencing to Fig. 1, is for convenience only and does not limit the invention or the claims.

The green seaweed feedstock is subjected to a washing treatment (A). This washing step can also be referred to as a first extraction step in the invention.

Accordingly, the feedstock is combined (mixed) with a first aqueous liquid to form a first slurry, followed by separation (B) of the solid and liquid fraction. The first aqueous liquid, before the contacting with seaweed, preferably has a total dissolved solids level of less than 10000 ppm by weight, more preferably less than 1000 ppm by weight. These values are lower than typical for seawater; and preferably the first aqueous liquid is less saline than seawater. Accordingly, the washing step provides for demineralization of the green seaweed.

However, it was surprisingly found by the present inventors that the spent washing liquid contains a useful polysaccharide fraction. Accordingly, the first liquid fraction is purified in the present invention to obtain a first polysaccharide fraction, in addition to a second polysaccharide fraction that is obtained from the extraction step. Furthermore, the inventors also observed higher yield than in a comparative process without the washing step.

The washing liquid, i.e. first aqueous liquid, is for instance tap water or demineralized water. The washing step is preferably performed with a liquid to dry solid ratio of max. 20, preferably max. 15, more preferably between 8 and 15 on weight basis.

The washing step is for instance performed for at least 5 minutes or at least 10 minutes, or at least 1 hour.

The washing step is suitably performed under gentle mixing. The pH of the first aqueous liquid, i.e. before combining with the seaweed, is e.g. in the range of 6.5 to 8.5, e.g. 6.5 to 8.0, such as 7.0 - 8.0.

The pH of the mixture as obtained at the end of the washing step is e.g. in the range 5.0 to 6.5.

The washing step is typically performed at a temperature between 0°C and 50°C, e.g. 10°C to 40°C.

The washing step also involves separating a first solid seaweed fraction and a first liquid fraction from the first slurry. Hence, the slurry is separated into at least two fractions, one fraction containing predominantly the solid material and the other material containing predominantly the liquid. For instance, solid/liquid separation based on the density difference is used. The slurry is e.g. separated using a decanter-centrifuge to recover a liquid supernatant as the liquid fraction, and a solid fraction, i.e. the wet washed seaweed.

The method involves purifying (C1, C2) the first liquid fraction to obtain a first polysaccharide fraction. This purification involves for instance the removal of species other than the desired polysaccharide, e.g. species other than ulvan. For instance, one or more of the following are removed in the purification step: water, suspended solid particles, molecules with a molecular weight lower than 100 kDa (e.g. proteins), and salts. The purification involves for example one or more purification treatments selected from the group consisting of filtration, dialysis, ultrafiltration, evaporation, drying and precipitation. In Figure 1, the purification step is provided by the filtration (C1) followed by evaporation and drying (C2).

Filtration can be used to remove suspended solids and particles, e.g. fragments of seaweed. Preferably a filtration aid is used, e.g. diatomaceous silica, such as available under the name Celite^{®}. In an example method, a combination of filtration followed by ultrafiltration is used.

The purification for example involves water removal, which can be evaporative or non-evaporative or a combination thereof. Depending on the concentration of polysaccharide in the supernatant, (vacuum) evaporation can also be performed to increase the concentration and reduce the volume of supernatant before drying.

Water removal is done, for instance, by drying, e.g. spray draying or freeze drying, or vacuum evaporation. Non-evaporative water removal includes e.g. ultrafiltration and dialysis. Hence, water removal may involve selective water transport through a semi-permeable membrane. Precipitation may also be used to isolate the polysaccharides from the aqueous liquid.

The method for instance involves the removal of at least 90 wt.% of the water content of the first liquid fraction to obtain the first polysaccharide fraction. The water removal involves e.g. the removal of at least 10 g water per 1 g of the dry weight of the polysaccharide fraction. This water removal provides advantageously for an increase of the polysaccharide concentration.

Preferably, the first polysaccharide fraction, i.e. the first product, contains less than 15 wt.% water or less than 10 wt.% water.

Preferably, the second polysaccharide fraction, i.e. the second product, contains less than 15 wt.% water or less than 10 wt.% water.

The purification may also involve, alternatively or in addition, removal of proteins and salts. For instance, dialysis is used. Dialysis involves removal of molecules with a lower molecular weight (e.g. less than 100 kDa or less than 30 kDa) and salts without (significant) water removal.

The method furthermore involves subjecting the first solid seaweed fraction to an extraction (D) with a second aqueous liquid to obtain a second slurry.

The extraction is for example conducted at temperature that is at least 20°C higher than during the washing treatment, or at least 40°C higher than during the washing treatment and/or at a second pH that is lower than during the washing treatment.

The extraction is for example, conducted at a temperature of at least 40°C, or at least 50°C, or at least 60°C. The extraction is, for example, conducted at a pH of max. 7, or less than 6, or less than 5, or less than 4.0 or less than 3.0, A pH of at least 2.0 can be used to avoid acid degradation of the polysaccharides. Good results were obtained with pH 2.5. For instance a mineral acid is used to adjust the pH. The second aqueous liquid preferably has such a temperature and pH.

Preferably the temperature is at least 80°C to obtain good extraction. Preferably the temperature is max. 140°C to avoid thermal degradation, e.g. up to 120°C. For instance, an autoclave is used for temperatures above 100°C. A higher temperature, e.g. above 100°C, can be used with a less acidic liquid.

A liquid to dry solid ratio of maximum 20, preferably maximum 15, e.g. between 8 and 15 on dry weight basis is advantageously used for this extraction, for the second aqueous liquid. These ratios apply in particular to batch process steps.

The extraction is e.g. done under gentle mixing.

The duration of the extraction treatment is e.g. at least 1 hour and typically max. 24 hours. A longer duration can be useful when the extraction is conducted at a pH closer to 7 and/or at lower temperatures.

The second slurry, obtained with the extraction, is subjected to separation (E) of solid and liquid, to separate a second solid fraction and a second liquid fraction from the second slurry. Preferences and details for this step are the same as for the separation of the first slurry, e.g. a decanter-centrifuge is used giving a supernatant as the second liquid fraction and a solid residue.

The method involves purification (G) of the second liquid fraction, usually with first filtration (F) to remove particles. The second liquid fraction is e.g. subjected to membrane filtration for said purification (G), in particular to obtain a second polysaccharide-containing fraction as a retentate, preferably with a molecular weight higher than 100 kDa. This purification can also be used to remove minerals and proteins comprised in the filtrate (having a smaller molecular size than the ulvan).

Optionally, the second polysaccharide-containing fraction is furthermore subjected to water removal (H), preferably it is dried, to obtain a solid polysaccharide product. For instance, spray drying, vacuum evaporation, or freeze drying is used. Precipitation can also be used to isolate the polysaccharides.

The first and second polysaccharide-containing fractions are hence obtained as distinct and separate products, from distinct steps. The first and second fraction also have a different composition.

The method preferably further involves subjecting the polysaccharide fractions to stabilization. Stabilization is done e.g. by drying (e.g. freeze drying or spray drying) or by precipitation, e.g. precipitation by adding an antisolvent.

In the inventive method, two products are obtained, both polysaccharide-containing fractions, which in particular comprise ulvan. Ulvan is a water-soluble polysaccharide and originates from the cell wall of the algae. Ulvan has been described as polyanionic heteropolysaccharides with sugar compositions comprising rhamnose, glucuronic acid, iduronic acid and xylose. The composition differs between species and depends also on processing procedures to prepare biomass and ulvan, and eco-physiological factors.

In an embodiment, the first polysaccharide fraction contains ulvan, with as components (A) 5 - 10 % rhamnan, up to 1 % galactan, 1 - 2 % glucan, 1 - 2 % xylan, 2 - 3 % glucuronic acid (anhydrous basis), and 2 - 6 % iduronic acid (anhydrous basis), all percentages as wt.% and on the basis of dry weight.

In an embodiment, the second polysaccharide fraction contains ulvan, with as components (B) 15 - 25 % rhamnan, up to 1 % galactan, up to 2 % glucan, 1-3 % xylan, 4 - 9 % glucuronic acid (anhydrous basis), and 10 - 20 % iduronic acid (anhydrous basis), all percentages as wt.% and on the basis of dry weight.

The invention also provides a polysaccharide-containing product obtainable with the method of the invention. The product is e.g. the first or second polysaccharide fraction. The product is preferably ulvan having such composition (A) or (B).

The use of ulvans for hydrogel films has been proposed, e.g. for wound dressing. The use of ulvan and ulvan oligosaccharides as a food additive has also been described. The use of ulvan for manufacturing films, e.g. for food packaging, has also been proposed, see e.g. Guidara et al, International Journal of Biological Macromolecules 150 (2020) 714-726.

Both the first and second polysaccharide fractions were tested and found to have film-forming properties, with suitable plasticizers. The second polysaccharide fraction may also be very suitable for preparing ingredients for e.g. cosmetic and medical compositions because of its higher purity than the first polysaccharide fraction.

The method can be conducted as a batch process or as a continuous process. Furthermore, one or more batch steps and one or more continuous steps can be combined in the method.

The term "first" as used herein permits the presence of preceding steps or items. The terms "first" and "second" are used herein as labels and permit the presence of intermediate steps or items. The term 'liquid fraction' as used herein includes suspensions and solutions.

The term 'polysaccharide fraction' indicates a composition comprising one or more polysaccharides. Preferably, the composition comprises ulvan. Preferably, the composition (i.e. fraction) comprises at least 30 wt.% of the polysaccharides, and comprises for example at least 30 wt.% ulvan (based on dry weight and relative to total dry weight of the fraction), where ulvan content may be taken to refer to the accumulative contents of rhamnan, iduronic acid, glucuronic acid and sulphate ions. The fraction can also be referred to as polysaccharide-containing product. The fraction is e.g. a liquid solution or a solid material.

### Examples

The invention will now be further illustrated by the following non-limiting example(s). These examples do not limit the invention and do not limit the claims.

### Example 1

Ulvan was extracted in two stages that included several downstream separation processes (DSP). For the first stage (washing step), 6 kg ww of dry grounded green seaweed *Ulva lactuca* (less than 4 mm size) was mixed with demineralised water in a vessel. The green seaweed was from cultivated seaweed, not wild-harvested.

The slurry had a liquid to solid ratio of 10 kg liquid per kg dw (dry weight) seaweed, adjusted for moisture content of the seaweed as measured with a moisture analyser. The slurry was kept at room temperature (about 20°C) for 16 h. After this, the slurry was separated in a decanter-centrifuge giving a supernatant and solid residue. The supernatant from the washing step was further filtered under pressure using a glass fibre filter and celite as filtration aid in multiple batches. A filtrate with high viscosity was obtained.

For the second stage (main extraction), the washed wet solids recovered from the decanter-centrifuge (i.e. the first solid seaweed fraction ) were further mixed with demineralised water to give a liquid to solid ratio of 10 kg liquid per kg dry weight seaweed in an autoclave.

The autoclave was equipped with a built-in paddle mixer, pH probe and oil heating jacket. The pH was adjusted to 2.5 with the addition of sulphuric acid. The slurry was then mixed in the reactor at 150 rpm and heated to 80°C. After 2 h, the reactor was cooled down and slurry mixture separated in the aforementioned decanter-centrifuge. The separated wet solid residues were dried in an air-ventilated oven at 60°C for storage. The supernatant was filtered under pressure as described before. The filtrate had a lower viscosity (based on visual inspection).

The filtrate was then subjected to ultra-filtration using a spiral membrane module with a cut-off of 100 kDa. The ultrafiltration was performed in dialysis mode. This was implemented by manual addition of 5 kg demineralised water to the retentate (feed tank) every time the same amount of permeate was collected. The filtration was performed until reaching 79% permeation. After this time, the retentate was drained from the system and further concentrated through evaporation under vacuum. In this step, approx. half of the water in the retentate was evaporated.

Small samples of the washing filtrate (first ulvan extract) and the concentrated retentate (second ulvan extract) were subjected to three different ways of stabilisation: (1) Freeze drying; (2) spray drying; and (3) precipitation with 3 weight parts of concentrated ethanol, centrifugation, washing of separated pellet with 1 weight part of concentrated ethanol, centrifugation and freeze drying. For spray drying, the liquid extracts were heated to 40 °C before feeding and the apparatus was set with an inlet temperature of 150 °C, feed pump at 10 g/min and N₂ gas flow of 700 L/h. The observed outlet temperature during spray drying was 79 and 90 °C (respectively for the first and second extracts) and observed pressure loss of 60 mbar. The amount of solid recovery through the three methods was compared with no significant differences (coefficient of variation of 4 and 10% for the first ulvan and second ulvan extracts, respectively).

Filtrate obtained from the washing step was much less coloured than the washing supernatant and showed gelling behaviour at room temperature without further concentration or demineralization. The filtrate was concentrated under vacuum to reduce the available volume and freeze dried to recover the extract as a stable powder **(****Fig. 2A****).** This powder is referred herein as first ulvan extract.

Filtrate obtained from the main extraction step was subjected to ultrafiltration (+100 kDa) in dialysis mode to remove minerals, evaporated under vacuum and further freeze dried to recover a stable powder. However, the material was not obtained in the form of a powder but rather as a fibrous foam **(****Fig. 2B****)** This stable product is referred herein as second ulvan extract.

Analyses of the samples included viscosity and molecular weight distribution via high performance liquid size exclusion chromatography (HP-SEC) using pullulan polymers for calibration. Analyses also included saccharide and acid-insoluble residue composition determined via sulphuric acid hydrolysis and high performance anion exchange chromatography (HPAEC), ash content (550 °C) and sulphate via determination of total sulphur from Inductive coupled plasma atomic emission spectroscopy (ICP-AES).

The first ulvan extract had a weight average molecular weight of 300 to 450 kDa and the second ulvan extract had a weight average molecular weight of 400-600 kDa.

**Table 1** shows further results of the method. The yields of first and second ulvan extracts corresponded to 27 and 8% based on the initial dry weight of the seaweed, respectively. These corresponded to 48% of the total available rhamnan and 58 % and 55% of the total available glucuronic and iduronic acid (anhydrous basis). Approx. 36% of the dry matter of the seaweed was extracted in the washing stage, where minerals were selectively removed from the seaweed (69% ash in initial seaweed). A lesser fraction of the dry matter was extracted from the seaweed during the main extraction step (-25% of the dry matter of starting seaweed). In this step, the mineral fraction of the seaweed was less preferentially extracted. As an example, during the washing step, there was a 3:1 mass ratio of ash to organics removed from the seaweed, while for the main extraction step, this ratio was 2: 1.

Ultrafiltration of the main extract filtrate to separate a 100 kDa-rich fraction as retentate led to recovery of 40% of the dry weight in the filtrate in the retentate, corresponding to 57% of the organic compounds. Interestingly, 93% of the rhamnan and 100% of the glucuronic and iduronic acid in the filtrate were recovered in the retentate, indicating a selective purification of the ulvan fraction.

**Table 1**

| Indicators | Units | Outcome |
|---|---|---|
| **Washing extraction** | | |
| DW (dry weight) extraction efficiency | wt% dw seaweed | 36.0 |
| Ash extraction efficiency | wt% ash in initial seaweed | 68.9 |
| Organics extraction efficiency | wt% organics in initial seaweed | 23.7 |
| First ulvan extract yield | wt% dw seaweed | 27.3 |
| Ash yield in first ulvan extract | wt% ash in initial seaweed | 53.5 |
| Organics yield in first ulvan extract | wt% organics in initial seaweed | 17.5 |

| **Main extraction** | | |
|---|---|---|
| DW extraction efficiency | wt% dw seaweed | 25.2 |
| Ash extraction efficiency | wt% ash in initial seaweed | 38.6 |
| Organics extraction efficiency | wt% organics in initial seaweed | 20.2 |
| DW recovery in retentate | wt% dw in filtrate | 39.8 |
| Ash recovery in retentate | wt% ash in filtrate | 21.9 |
| Organics recovery in retentate | wt% organics in filtrate | 56.8 |
| Second ulvan extract yield | wt% dw seaweed | 8.4 |
| Ash yield in second ulvan extract | wt% ash in initial seaweed | 7.8 |
| Organics yield in second ulvan extract | wt% organics in initial seaweed | 8.6 |

**Fig. 3** presents the distribution of main components in *Ulva lactuca* among the four main product streams of Example 1, namely the final seaweed residue, the first ulvan extract, the second ulvan extract and the permeate fraction from the ultrafiltration. Herein Rha indicates rhamnan, Gal: galactan, Glu: glucan; Xyl: xylan; Glucur: glucuronic acid (anhydrous basis); Idurur: iduronic acid (anhydrous basis), Ash550C: ash content after treatment at 550°C for 12 hours, SO₃: sulfate groups content based on total sulphur measured via ICP-AES.

Taking into account the amount of total free liquid available during the two extraction steps, the release yield of rhamnan was 46 and 24% of the available carbohydrate in the starting seaweed. This corresponded to a total of 70% of the available rhamnan, which was higher compared to the released rhamnan yield obtained in a comparative lab-scale single stage extraction at 80 °C, pH 2.5 and 2 h (65% of available rhamnan). In the comparative single-stage process at lab-scale, no washing with water at ambient temperature was used.

The first ulvan extract powder had a high ash content due to the high solubilisation of minerals during the washing and to the fact that no mineral removal was applied to the gel-like filtrate of the washing. Further results are shown in Table 2.

**Table 2**

| Component | First ulvan extract | | Second ulvan extract | |
|---|---|---|---|---|
| | Average | SD | Average | SD |
| Biochemical components | | | | |
| Rhamnan, % dw | 7.88 | 1.43 | 21.97 | 0.26 |
| Galactan, % dw | 0.15 | 0.21 | 0.55 | 0.01 |
| Glucan, % dw | 1.00 | 0.16 | 0.70 | 0.02 |
| Xylan, % dw | 1.30 | 0.41 | 2.89 | 0.13 |
| Glucuronic acid (anhydrous basis), % dw | 2.53 | 0.01 | 6.84 | 0.54 |
| Iduronic acid (anhydrous basis), % dw | 4.11 | 0.99 | 13.65 | 1.05 |
| Acid-insoluble residue, % dw | 2.15 | 1.95 | 0.73 | 0.07 |
| Ash550, % dw | 53.18 | 0.02 | 25.34 | 0.34 |
| SO₃ | 25.81 | n.d. | 17.81 | n.d. |
| Rha:Xyl, mol:mol | 5.5:1 | - | 6.9:1 | - |
| Rha:UroAc, mol/mol | 1.4:1 | - | 1.3:1 | - |

It was found that the first ulvan extract had a higher viscosity and also shear-tinning behaviour (pseudo-plastic). The second ulvan extract had a lower viscosity and had rather a Newtonian behaviour (less impact of shear rate on the viscosity). This indicates that first extract is likely more suitable for use as rheology enhancer additive compared to the second extract.

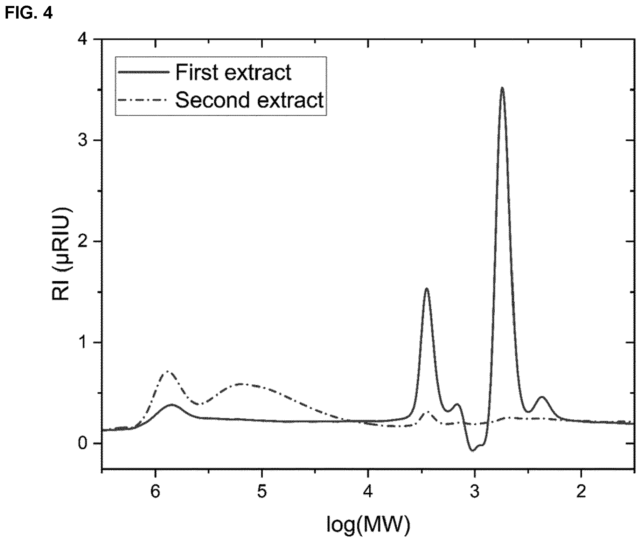

**Figure 4** shows SEC chromatograms of the first ulvan extract (solid line) and second ulvan extract (dashed line) obtained in Example 1. Assignment of MW in this figure was given by pullulan standards. Extract powders were diluted in eluent medium with a dilution factor of 100.

## Claims

1. A method of extracting a polysaccharide-comprising fraction from a green seaweed, comprising:
a) subjecting the green seaweed to a washing treatment that involves combining the green seaweed with a first aqueous liquid to form a first slurry and separating a first solid seaweed fraction and a first liquid fraction from the first slurry;
b) purifying the first liquid fraction to obtain a first polysaccharide fraction;
c) subjecting the first solid seaweed fraction to an extraction treatment with a second aqueous liquid at temperature that is at least 20°C higher than during the washing treatment and/or at a second pH that is lower than during the washing treatment to obtain a second slurry;
d) separating a second solid fraction and a second liquid fraction from the second slurry; and
e) purifying the second liquid fraction to obtain a second polysaccharide fraction.

2. The method of claim 1, wherein: step a) involves washing of comminuted seaweed, e.g. milled dried seaweed or ground wet seaweed, at a temperature below 60°C, and a liquid to dry solid weight ratio of below 20.

3. The method of claim 1 or 2, wherein step b) involves water removal and step e) involves membrane filtration.

4. The method of any of the preceding claims, wherein step c) involves an extraction treatment at 80 to 120°C and at a pH of 2.0 to 7.0 for at least 1 hour, with a liquid to dry solid weight ratio of below 20, preferably wherein the pH is in the range 2.0 to 5.0.

5. The method according to any of the preceding claims, wherein the polysaccharide-comprising fraction comprises ulvan.

6. The method according to any of the preceding claims, wherein the green seaweed is from a species of the *Ulva* genus.

7. The method according to claim 1, wherein the green seaweed is from a species of the *Ulva* genus, wherein the polysaccharide-comprising fraction comprises ulvan, and wherein
step a) involves washing of comminuted seaweed, e.g. milled dried seaweed or ground wet seaweed, at a temperature below 60°C, and a liquid to dry solid weight ratio of below 20, and
step b) involves water removal, and
step c) involves an extraction treatment at 80 to 120°C and a pH of 2.0 to 7.0, preferably 2.0 to 5.0, for at least 1 hour, with a liquid to dry solid weight ratio of below 20, and
step e) involves membrane filtration.

8. Ulvan-containing product obtainable by the method according to any of claims 1-7.
